# EUROPEAN PATENT SPECIFICATION

(11) **EP 3 180 932 B1**
(45) Date of publication and mention of the grant of the patent: **07.10.2020**
(21) Application number: 15756256.2
(22) Date of filing: 10.08.2015
(51) Int. Cl.: H04W 8/24, H04W 76/14, H04W 72/04

(54) **MANAGING UNIDIRECTIONAL FREQUENCY CAPABILITY FOR D2D OPERATION**
VERWALTUNG DER UNIDIREKTIONALEN FREQUENZFÄHIGKEIT FÜR D2D-BETRIEB
GESTION DE LA CAPACITÉ DE FRÉQUENCE UNIDIRECTIONNELLE POUR L'OPÉRATION EN D2D

(30) Priority: 11.08.2014 US 201462035681 P
(43) Date of publication of application: 21.06.2017
(73) Proprietor: Telefonaktiebolaget LM Ericsson (publ), 164 83 Stockholm (SE)
(72) Inventor: SIOMINA, Iana, SE-183 30 Täby (SE)
(74) Representative: Zacco Sweden AB
(86) International application number: PCT/SE2015/050864
(87) International publication number: WO 2016/024908

(56) References cited:
- LG ELECTRONICS INC: "3GPP TSG-RAN WG2 #87; R2-143748; UE capability signaling for multi-carrier capable UEs", 3GPP DRAFT; R2-143748 [D2D-C] UE CAPABILITY SIGNALING FOR MULTI-CARRIER CAPABLE UES, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Dresden, Germany; 20140818 - 20140822 9 August 2014 (2014-08-09), XP050820019, Retrieved from the Internet: URL:http://www.3gpp.org/ftp/tsg_ran/WG2_RL 2/TSGR2_87/Docs/ [retrieved on 2014-08-09]
- ZTE: "3GPP TSG-RAN WG2 #87; R2-143596; On D2D UE capability, D2D interest and prioritization", 3GPP DRAFT; R2-143596 D2D CAPABILITY - INTEREST - PRIORITIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Dresden, Germany; 20140818 - 20140822 9 August 2014 (2014-08-09), XP050819960, Retrieved from the Internet: URL:http://www.3gpp.org/ftp/tsg_ran/WG2_RL 2/TSGR2_87/Docs/ [retrieved on 2014-08-09]
- HUAWEI ET AL: "3GPP TSG-RAN WG2 #87; R2-143448; Discussion on UE capability report for D2D communication", 3GPP DRAFT; R2-143448 DISCUSSION ON UE CAPABILITY REPORT FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Dresden, Germany; 20140818 - 20140822 9 August 2014 (2014-08-09), XP050819941, Retrieved from the Internet: URL:http://www.3gpp.org/ftp/tsg_ran/WG2_RL 2/TSGR2_87/Docs/ [retrieved on 2014-08-09]

## Description

### Technical field

The present disclosure pertains to D2D operation of a D2D enabled node or UE for a wireless communication network.

### Background

The introduction of D2D capabilities to wireless communication technology, e.g. into LTE Rel. 12, new challenges regarding the use or sharing of resources between cellular and D2D operations have arisen. This is partly due to D2D operation being performed utilizing the same or similar carriers or bands as cellular operation. To provide sufficient radio circuitry resources to fully support simultaneous D2D operation and cellular operation, in particular multi-carrier operation, could require significant increase in costs of D2D enabled nodes.

LG ELECTRONICS INC, "3GPP TSG-RAN WG2 #87; R2-143748; UE capability signaling for multi-carrier capable UEs", vol. RAN WG2, no. Dresden, Germany, dated 9 August 2014, describes D2D capability signaling or UE capability signaling with multi-carrier support capabilities taken into account. More specifically, the D2D transmission or reception capabilities are indicated specifically to the network as a separate capability in conjunction with existing supported band.

ZTE, "3GPP TSG-RAN WG2 #87; R2-143596; On D2D UE capability, D2D interest and prioritization", vol. RAN WG2, no. Dresden, Germany, dated 9 August 2014, addresses issues related to D2D UE capability signaling, D2D prioritization and interest indication, and D2D indication during Radio Resource Control (RRC) connection establishment.

### Summary

The invention is defined by the independent claims. Furthermore, the embodiments of the invention are those defined by the claims. Moreover, examples, embodiments and descriptions, which are not covered by the claims are presented not as embodiments of the invention, but as background art or examples useful for understanding the invention.

It is desirable to provide approaches allowing use of D2D operation in addition to cellular operation with limited resource requirements. Thus, approaches for managing or handling D2D operation and associated resources in an improved way are provided. In particular, approaches of handling unidirectional frequency capabilities are disclosed, which allow the use of less complicated and/or cheaper radio circuitry and/or provide improved sharing of radio resources between cellular and D2D operations.

There is disclosed a D2D enabled node for a wireless communication network. The D2D enabled node is adapted for indicating at least one unidirectional frequency capability of the D2D enabled node to at least one other node. Accordingly, the other node may adapt its own operations, e.g. D2D operation, to the unidirectional frequency capability indicated.

Moreover, there is disclosed a method performed by a D2D enabled node. The method comprises indicating at least one unidirectional frequency capability of the D2D enabled node to at least one other node.

A node for a wireless communication network is also proposed. The node is adapted for obtaining at least one unidirectional frequency capability for a first D2D enabled node. In addition, the node is adapted for using the obtained unidirectional frequency capability for one or more of operational tasks.

There may be considered a method performed by a node for a wireless communication network. The method comprises obtaining at least one unidirectional frequency capability for a first D2D enabled node, as well as using the obtained unidirectional frequency capability for one or more of operational tasks.

Moreover, a computer program product comprising instructions executable by control circuitry is disclosed. The instructions cause the control circuitry to carry out and/or control a method according to any one of the methods disclosed herein when executed by the control circuitry.

A storage medium adapted to store instructions executable by control circuitry is also disclosed. The instructions cause the control circuitry to carry out and/or control a method according to any one of the methods disclosed herein when executed by the control circuitry.

### Brief description of the drawings

Figure 1 a "Direct mode" data path in the EPS for communication between two UEs;
Figure 2 a "Locally-routed" data path in the EPS for communication between two UEs when UEs are served by the same eNBs;
Figure 3 a default data path scenario in the EPS for cellular communication between two UEs;
Figure 4 an exemplary D2D architecture;
Figure 5 an exemplary D2D enabled node or UE; and
Figure 6 an exemplary base station or network node.

Currently, if a D2D enabled node or UE is supporting an operating band, which is designated for both DL and UL transmissions, then the D2D enabled node or UE is supporting both transmitting and receiving signals in that supported band.

### Detailed description

Operating bands for single carrier cellular operation are described in the following.
For LTE based cellular networks, a Rel-12 D2D enabled node or UE may be designed to support any of the E-UTRA operating bands listed in the table below.

**Table 1. E-UTRA operating bands [3GPP TS 36.101, v12.3.0]**

| **E-UTRA Operating Band** | **Uplink (UL) operating band BS receive UE transmit** | | | **Downlink (DL) operating band BS transmit UE receive** | | | **Duplex Mode** |
|---|---|---|---|---|---|---|---|
| | **F_{UL_low} - F_{UL_high}** | | | **F_{DL_low} - F_{DL_high}** | | | |
| 1 | 1920 MHz | - | 1980 MHz | 2110 MHz | - | 2170 MHz | FDD |
| 2 | 1850 MHz | - | 1910 MHz | 1930 MHz | - | 1990 MHz | FDD |
| 3 | 1710 MHz | - | 1785 MHz | 1805 MHz | - | 1880 MHz | FDD |
| 4 | 1710 MHz | - | 1755 MHz | 2110 MHz | - | 2155 MHz | FDD |
| 5 | 824 MHz | - | 849 MHz | 869 MHz | - | 894MHz | FDD |
| 6¹ | 830 MHz | - | 840 MHz | 875 MHz | - | 885 MHz | FDD |
| 7 | 2500 MHz | - | 2570 MHz | 2620 MHz | - | 2690 MHz | FDD |
| 8 | 880 MHz | - | 915 MHz | 925 MHz | - | 960 MHz | FDD |
| 9 | 1749.9 MHz | - | 1784.9 MHz | 1844.9 MHz | - | 1879.9 MHz | FDD |
| 10 | 1710 MHz | - | 1770 MHz | 2110 MHz | - | 2170 MHz | FDD |
| 11 | 1427.9 MHz | - | 1447.9 MHz | 1475.9 MHz | - | 1495.9 MHz | FDD |
| 12 | 699 MHz | - | 716 MHz | 729 MHz | - | 746 MHz | FDD |
| 13 | 777 MHz | - | 787 MHz | 746 MHz | - | 756 MHz | FDD |
| 14 | 788 MHz | - | 798 MHz | 758 MHz | - | 768 MHz | FDD |
| 15 | Reserved | | | Reserved | | | FDD |
| 16 | Reserved | | | Reserved | | | FDD |
| 17 | 704 MHz | - | 716 MHz | 734 MHz | - | 746 MHz | FDD |
| 18 | 815 MHz | - | 830 MHz | 860 MHz | - | 875 MHz | FDD |
| 19 | 830 MHz | - | 845 MHz | 875 MHz | - | 890 MHz | FDD |
| 20 | 832 MHz | - | 862 MHz | 791 MHz | - | 821 MHz | FDD |
| 21 | 1447.9 MHz | - | 1462.9 MHz | 1495.9 MHz | - | 1510.9 MHz | FDD |
| 22 | 3410 MHz | - | 3490 MHz | 3510 MHz | - | 3590 MHz | FDD |
| 23 | 2000 MHz | - | 2020 MHz | 2180 MHz | - | 2200 MHz | FDD |
| 24 | 1626.5 MHz | - | 1660.5 MHz | 1525 MHz | - | 1559 MHz | FDD |
| 25 | 1850 MHz | - | 1915 MHz | 1930 MHz | - | 1995 MHz | FDD |
| 26 | 814 MHz | - | 849 MHz | 859 MHz | - | 894 MHz | FDD |
| 27 | 807 MHz | - | 824 MHz | 852 MHz | - | 869 MHz | FDD |
| 28 | 703 MHz | - | 748 MHz | 758 MHz | - | 803 MHz | FDD |
| 29 | N/A | | | 717 MHz | - | 728 MHz | FDD² |
| 30 | 2305 MHz | - | 2315 MHz | 2350 MHz | - | 2360 MHz | FDD |
| 31 | 452.5 MHz | - | 457.5 MHz | 462.5 MHz | - | 467.5 MHz | FDD |
| ... | | | | | | | |
| 33 | 1900 MHz | - | 1920 MHz | 1900 MHz | - | 1920 MHz | TDD |
| 34 | 2010 MHz | - | 2025 MHz | 2010 MHz | - | 2025 MHz | TDD |
| 35 | 1850 MHz | - | 1910 MHz | 1850 MHz | - | 1910 MHz | TDD |
| 36 | 1930 MHz | - | 1990 MHz | 1930 MHz | - | 1990 MHz | TDD |
| 37 | 1910 MHz | - | 1930 MHz | 1910 MHz | - | 1930 MHz | TDD |
| 38 | 2570 MHz | - | 2620 MHz | 2570 MHz | - | 2620 MHz | TDD |
| 39 | 1880 MHz | - | 1920 MHz | 1880 MHz | - | 1920 MHz | TDD |
| 40 | 2300 MHz | - | 2400 MHz | 2300 MHz | - | 2400 MHz | TDD |
| 41 | 2496 MHz | | 2690 MHz | 2496 MHz | | 2690 MHz | TDD |
| 42 | 3400 MHz | - | 3600 MHz | 3400 MHz | - | 3600 MHz | TDD |
| 43 | 3600 MHz | - | 3800 MHz | 3600 MHz | - | 3800 MHz | TDD |
| 44 | 703 MHz | - | 803 MHz | 703 MHz | - | 803 MHz | TDD |
| NOTE 1: Band 6 is not applicable | | | | | | | |
| NOTE 2: Restricted to E-UTRA operation when carrier aggregation is configured. The downlink operating band is paired with the uplink operating band (external) of the carrier aggregation configuration that is supporting the configured Pcell. | | | | | | | |

Operating bands for CA cellular operation described in the following. For a D2D enabled node or UE to support CA (Carrier Aggregation) over a band combination, it is not sufficient that the D2D enabled node or UE supports just every single band in the combination, but it has to support also the band combination which is often determined by band-combination-specific additional RF requirements.

Below are the operating band combinations that a Rel-12 D2D enabled node or UE may support for intra-band contiguous and non-contiguous CA and for inter-band CA.

**Table 2: Intra-band contiguous CA operating bands**

| **E-UTRA CA Band** | **E-UTRA Band** | **Uplink (UL) operating band** | | | **Downlink (DL) operating band** | | | **Duplex Mode** |
|---|---|---|---|---|---|---|---|---|
| | | **BS receive / UE transmit** | | | **BS transmit / UE receive** | | | |
| | | **F_{UL_low}**-**F_{UL_high}** | | | **F_{DL_low}**-**F_{DL_high}** | | | |
| CA_1 | 1 | 1920 MHz | - | 1980 MHz | 2110 MHz | - | 2170 MHz | FDD |
| CA_3 | 3 | 1710MHz | - | 1785MHz | 1805MHz | - | 1880MHz | FDD |
| CA_7 | 7 | 2500 MHz | - | 2570 MHz | 2620 MHz | - | 2690 MHz | FDD |
| CA_23 | 23 | 2000 MHz | | 2020 MHz | 2180 MHz | | 2200 MHz | FDD |
| CA_27 | 27 | 807 MHz | - | 824 MHz | 852 MHz | - | 869 MHz | FDD |
| CA_38 | 38 | 2570 MHz | - | 2620 MHz | 2570 MHz | - | 2620 MHz | TDD |
| CA_39 | 39 | 1880 MHz | - | 1920 MHz | 1880 MHz | - | 1920 MHz | TDD |
| CA_40 | 40 | 2300 MHz | - | 2400 MHz | 2300 MHz | - | 2400 MHz | TDD |
| CA_41 | 41 | 2496 MHz | | 2690 MHz | 2496 MHz | | 2690 MHz | TDD |

**Table 3: Inter-band CA operating bands**

| **E-UTRA CA Band** | **E-UTRA Band** | **Uplink (UL) operating band** | | | **Downlink (DL) operating band** | | | **Duplex Mode** |
|---|---|---|---|---|---|---|---|---|
| | | **BS receive / UE transmit** | | | **BS transmit / UE receive** | | | |
| | | **F_{UL_low}**-**F_{UL_high}** | | | **F_{DL_low}**-**F_{DL_high}** | | | |
| CA_1-5 | 1 | 1920 MHz | - | 1980 MHz | 2110 MHz | - | 2170 MHz | FDD |
| | 5 | 824 MHz | - | 849 MHz | 869 MHz | - | 894 MHz | |
| CA_1-8 | 1 | 1920 MHz | - | 1980 MHz | 2110 MHz | - | 2170 MHz | FDD |
| | 8 | 880 MHz | - | 915 MHz | 925 MHz | - | 960 MHz | |
| CA_1-18 | 1 | 1920 MHz | - | 1980 MHz | 2110 MHz | - | 2170 MHz | FDD |
| | 18 | 815 MHz | - | 830 MHz | 860 MHz | - | 875 MHz | |
| CA_1-19 | 1 | 1920 MHz | - | 1980 MHz | 2110 MHz | - | 2170 MHz | FDD |
| | 19 | 830 MHz | - | 845 MHz | 875 MHz | - | 890 MHz | |
| CA_1-21 | 1 | 1920 MHz | - | 1980 MHz | 2110 MHz | - | 2170 MHz | FDD |
| | 21 | 1447.9 MHz | - | 1462.9 MHz | 1495.9 MHz | - | 1510.9 MHz | |
| CA_1-26 | 1 | 1920 MHz | - | 1980 MHz | 2110 MHz | - | 2170 MHz | FDD |
| | 26 | 814 MHz | - | 849 MHz | 859 MHz | - | 894 MHz | |
| CA_2-4 | 2 | 1850 MHz | - | 1910 MHz | 1930 MHz | - | 1990 MHz | FDD |
| | 4 | 1710 MHz | - | 1755 MHz | 2110 MHz | - | 2155 MHz | |
| CA_2-5 | 2 | 1850 MHz | - | 1910 MHz | 1930 MHz | - | 1990 MHz | FDD |
| | 5 | 824 MHz | - | 849 MHz | 869 MHz | - | 894 MHz | |
| CA_2-12 | 2 | 1850 MHz | - | 1910 MHz | 1930 MHz | - | 1990 MHz | FDD |
| | 12 | 699 MHz | - | 716 MHz | 729 MHz | - | 746 MHz | |
| CA_2-13 | 2 | 1850 MHz | - | 1910 MHz | 1930 MHz | - | 1990 MHz | FDD |
| | 13 | 777 MHz | - | 787 MHz | 746 MHz | - | 756 MHz | |
| CA_2-17 | 2 | 1850 MHz | - | 1910 MHz | 1930 MHz | - | 1990 MHz | FDD |
| | 17 | 704 MHz | - | 716 MHz | 734 MHz | - | 746 MHz | |
| CA_2-29 | 2 | 1850 MHz | - | 1910 MHz | 1930 MHz | - | 1990 MHz | FDD |
| | 29 | N/A | | | 717 MHz | - | 728 MHz | |
| CA_3-5 | 3 | 1710 MHz | - | 1785 MHz | 1805 MHz | - | 1880 MHz | FDD |
| | 5 | 824 MHz | - | 849 MHz | 869 MHz | - | 894 MHz | |
| CA_3-7 | 3 | 1710 MHz | - | 1785 MHz | 1805 MHz | - | 1880 MHz | FDD |
| | 7 | 2500 MHz | - | 2570 MHz | 2620 MHz | - | 2690 MHz | |
| CA_3-8 | 3 | 1710 MHz | | 1785 MHz | 1805 MHz | | 1880 MHz | FDD |
| | 8 | 880 MHz | | 915 MHz | 925 MHz | | 960 MHz | |
| CA_3-19 | 3 | 1710 MHz | | 1785 MHz | 1805 MHz | | 1880 MHz | FDD |
| | 19 | 830 MHz | | 845 MHz | 875 MHz | | 890 MHz | |
| CA_3-20 | 3 | 1710 MHz | - | 1785 MHz | 1805 MHz | - | 1880 MHz | FDD |
| | 20 | 832 MHz | - | 862 MHz | 791 MHz | - | 821 MHz | |
| CA_3-26 | 3 | 1710 MHz | - | 1785 MHz | 1805 MHz | - | 1880 MHz | FDD |
| | 26 | 814 MHz | - | 849 MHz | 859 MHz | - | 894 MHz | |
| CA_3-27 | 3 | 1710 MHz | - | 1785 MHz | 1805 MHz | - | 1880 MHz | FDD |
| | 27 | 807 MHz | - | 824 MHz | 852 MHz | - | 869 MHz | |
| CA_3-28 | 3 | 1710 MHz | - | 1785 MHz | 1805 MHz | - | 1880 MHz | FDD |
| | 28 | 703 MHz | - | 748 MHz | 758 MHz | - | 803 MHz | |
| CA_4-5 | 4 | 1710 MHz | - | 1755 MHz | 2110 MHz | - | 2155 MHz | FDD |
| | 5 | 824 MHz | - | 849 MHz | 869 MHz | - | 894 MHz | |
| CA_4-7 | 4 | 1710 MHz | | 1755 MHz | 2110 MHz | | 2155 MHz | FDD |
| | 7 | 2500 MHz | | 2570 MHz | 2620 MHz | | 2690 MHz | |
| CA_4-12 | 4 | 1710 MHz | - | 1755 MHz | 2110 MHz | - | 2155 MHz | FDD |
| | 12 | 699 MHz | - | 716 MHz | 729 MHz | - | 746 MHz | |
| CA_4-13 | 4 | 1710 MHz | - | 1755 MHz | 2110 MHz | - | 2155 MHz | FDD |
| | 13 | 777 MHz | - | 787 MHz | 746 MHz | - | 756 MHz | |
| CA_4-17 | 4 | 1710 MHz | - | 1755 MHz | 2110 MHz | - | 2155 MHz | FDD |
| | 17 | 704 MHz | - | 716 MHz | 734 MHz | - | 746 MHz | |
| CA_4-29 | 4 | 1710 MHz | - | 1755 MHz | 2110 MHz | - | 2155 MHz | FDD |
| | 29 | N/A | | | 717 MHz | - | 728 MHz | |
| CA_5-7 | 5 | 824 MHz | - | 849 MHz | 869 MHz | - | 894 MHz | FDD |
| | 7 | 2500 MHz | - | 2570 MHz | 2620 MHz | - | 2690 MHz | |
| CA_5-12 | 5 | 824 MHz | - | 849 MHz | 869 MHz | - | 894 MHz | FDD |
| | 12 | 699 MHz | - | 716 MHz | 729 MHz | - | 746 MHz | |
| CA_5-17 | 5 | 824 MHz | - | 849 MHz | 869 MHz | - | 894 MHz | FDD |
| | 17 | 704 MHz | - | 716 MHz | 734 MHz | - | 746 MHz | |
| CA_5-25 | 5 | 824 MHz | - | 849 MHz | 869 MHz | - | 894 MHz | FDD |
| | 25 | 1850 MHz | - | 1915 MHz | 1930 MHz | - | 1995 MHz | |
| CA_7-20 | 7 | 2500 MHz | - | 2570 MHz | 2620 MHz | - | 2690 MHz | FDD |
| | 20 | 832 MHz | - | 862 MHz | 791 MHz | - | 821 MHz | |
| CA_7-28 | 7 | 2500 MHz | - | 2570 MHz | 2620 MHz | - | 2690 MHz | FDD |
| | 28 | 703 MHz | - | 748 MHz | 758 MHz | - | 803 MHz | |
| CA_8-20 | 8 | 880 MHz | - | 915 MHz | 925 MHz | - | 960 MHz | FDD |
| | 20 | 832 MHz | - | 862 MHz | 791 MHz | - | 821 MHz | |
| CA_11-18 | 11 | 1427.9 MHz | - | 1447.9 MHz | 1475.9 MHz | - | 1495.9 MHz | FDD |
| | 18 | 815 MHz | - | 830 MHz | 860 MHz | - | 875 MHz | |
| CA_12-25 | 12 | 699 MHz | - | 716 MHz | 729 MHz | - | 746 MHz | FDD |
| | 25 | 1850 MHz | - | 1915 MHz | 1930 MHz | - | 1995 MHz | |
| CA_19-21 | 19 | 830 MHz | - | 845 MHz | 875 MHz | - | 890 MHz | FDD |
| | 21 | 1447.9 MHz | - | 1462.9 MHz | 1495.9 MHz | - | 1510.9 MHz | |
| CA_23-29 | 23 | 2000 MHz | - | 2020 MHz | 2180 MHz | - | 2200 MHz | FDD |
| | 29 | N/A | | | 717 MHz | - | 728 MHz | |
| CA_39-41 | 39 | 1880 MHz | - | 1920 MHz | 1880 MHz | - | 1920 MHz | TDD |
| | 40 | 2496 MHz | - | 2690 MHz | 2496 MHz | - | 2690 MHz | |

**Table 4: Intra-band non-contiguous CA operating bands**

| **E-UTRA CA Band** | **E-UTRA Band** | **Uplink (UL) operating band** | | | **Downlink (DL) operating band** | | | **Duplex Mode** |
|---|---|---|---|---|---|---|---|---|
| | | **BS receive / UE transmit** | | | **BS transmit / UE receive** | | | |
| | | **F_{UL_low}**-**F_{UL_high}** | | | **F_{DL_low}**-**F_{DL_high}** | | | |
| CA_3-3 | 3 | 1710 MHz | - | 1785 MHz | 1805 MHz | - | 1880 MHz | FDD |
| CA_4-4 | 4 | 1710 MHz | - | 1755 MHz | 2110 MHz | - | 2155 MHz | FDD |
| CA_7-7 | 7 | 2500 MHz | - | 2570 MHz | 2620 MHz | - | 2690 MHz | FDD |
| CA_23-23 | 23 | 2000 MHz | | 2020 MHz | 2180 MHz | | 2200 MHz | FDD |
| CA_25-25 | 25 | 1850 MHz | - | 1915 MHz | 1930 MHz | - | 1995 MHz | FDD |
| CA_41-41 | 41 | 2496 MHz | - | 2690 MHz | 2496 MHz | - | 2690 MHz | TDD |

The D2D enabled node/s or UE/s and/or the network node/s described herein may be adapted to support the bands according to any one or any one combination of the tables and/or according to the LTE standard, in particular REL-12.

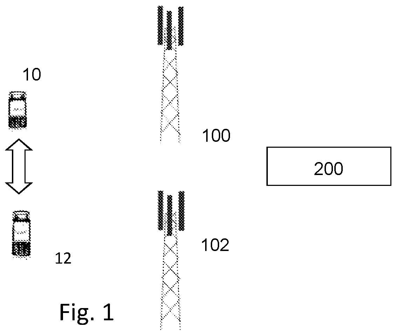

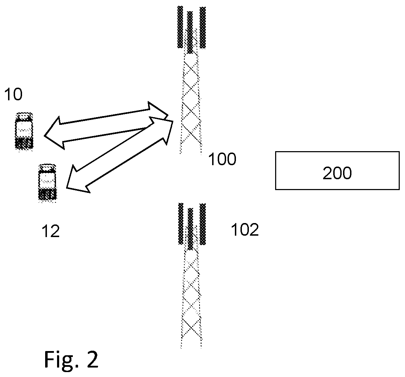

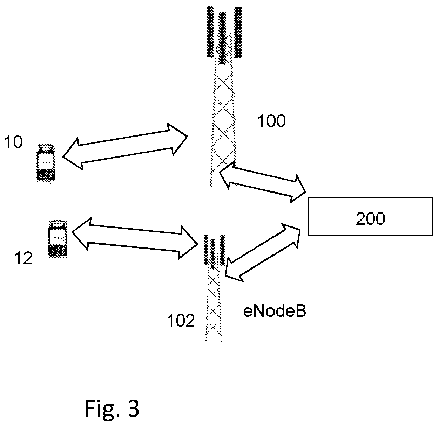

If D2D enabled nodes or UEs are in proximity to each other, they may be able to use a "direct mode" (e.g., as in Figure 1) or "locally-routed" (e.g., as in Figure 2) path for data communication, unlike in the conventional cellular communication (Figure 3). In such device-to-device communication (D2D), which may also be called "ProSe" (for PROximity SErvices), the source and the target are wireless devices like D2D enabled nodes, e.g., UEs. Some of the potential advantages of D2D or ProSe are off-loading of the cellular network, faster communication, increased awareness of surrounding wireless devices of interest (e.g., running the same application), higher-quality links due to a shorter distance, etc. Some appealing applications of D2D communications are video streaming, online gaming, media downloading, peer-to-peer (P2P), file sharing, etc.

Generally, a UE may be considered as an example or representative of a D2D enabled node, and the term D2D enabled node may be interchanged for UE unless explicitly stated otherwise. An eNB or base station may be considered to be one variant of a network node. In particular in the tables, UE may represent a D2D enabled node or UE.

In Figures 1 to 3, there are shown different setups for communication of user equipments within a wireless communication network. In these figures, the first node or first user equipment UE1 is indicated with reference numeral 10, the second node or second user equipment is indicated with reference numeral 12. A first base station or network node, which may be an eNodeB and/or EPC according to LTE/E-UTRAN, carries the reference numeral 100, whereas a second base station, which may be an eNodeB and/or EPC according to LTE/UTRAN, is referenced with numeral 102. The nodes 100, 102 may be configured as coordinating nodes for D2D communication between the UEs 10, 12. Reference numeral 200 indicates higher layer functions or devices of the network, to which the base stations 100, 102 may be connected or connectable, e.g. LTE packet core elements like SGW (Server GateWay) and/or PGW (PDN GateWay) and/or MME (Mobility Management Entity).

If UEs 100, 102 are in proximity to each other, they may be able to use a "direct mode" (e.g., as in Figure 1) or "locally-routed" (e.g., as in Figure 2) path for data communication, unlike in the conventional cellular communication (Figure 3).

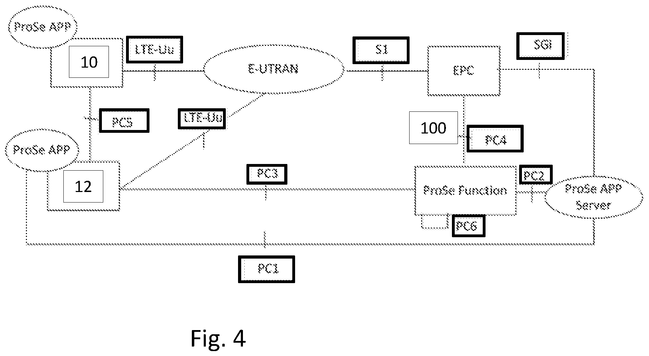

A more detailed example reference architecture for D2D operation according to one possible LTE/E-UTRAN implementation is illustrated in Figure 4, in which only a setup with two UEs 10, 12 connected to a common base station or eNodeB 100 is shown. In Figure 4, PCn identifies different reference points or interfaces. PC1 refers to a reference point between a ProSe application ProSe APP running on an D2D enabled node or UE 10 or 12, PC2 a reference point between an ProSe Application server and a ProSe function provider on a server or base station side. PC3 indicates a reference point between the D2D enabled node or UE 12 and the ProSE function, e.g. for discovery and/or communication. PC4 refers to a reference point between the EPC and the ProSe function, e.g. for setting up setting up one-to-one communication between UEs 10 and 12. PC5 is a reference point between D2D enabled node or UE 10 and D2D enabled node or UE 12, e.g. a first node and a second node involved in D2D communication, which may be used e.g. for direct or relayed communication between the UEs. PC6 identifies a reference point between ProSE functions of different networks, e.g. if UEs 10, 12 are subscribed to different PLMNs (Public Land Mobile Networks). SGi indicates an interface which may be used, inter alia, for application data and/or application level control. The EPC (Evolved Packet Core) may generally include a plurality of core packet functions or entities, e.g. MME, SGW, PWG, PCRF (Policy Charging and Rules Function), HSS (Home Subscriber Server), etc. E-UTRAN is the preferred RAT of the arrangement of Figure 4. LTE-Uu indicates data transmission connections between the UEs 10, 12 and the base station 100.

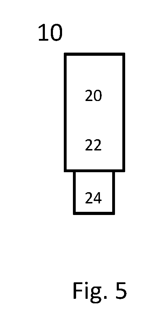

Figure 5 schematically shows a D2D enabled node or user equipment 10, which may be a node of a device-to-device communication, in closer details. User equipment 10 comprises control circuitry 20, which may comprise a controller connected to a memory. A receiving module and/or transmission module and/or control module may be implemented in the control circuitry 20, in particular as module in the controller. The user equipment also comprises radio circuitry 22 providing receiving and transmitting or transceiving functionality, the radio circuitry 22 connected or connectable to the control circuitry. An antenna circuitry 24 of the user equipment 10 is connected or connectable to the radio circuitry 22 to collect or send and/or amplify signals. Radio circuitry 22 and the control circuitry 20 controlling it are configured for device-to-device communication, in particular utilizing E-UTRAN/LTE resources as described herein and/or receiving allocation data and/or transmit D2D data based on allocation data.

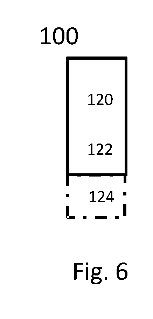

Figure 6 schematically show a base station 100, which in particular may be an eNodeB. Base station 100 comprises control circuitry 120, which may comprise a controller connected to a memory. A configuring unit and/or a determination unit may be comprised in the control circuitry, the latter in particular if the base station is configured as a coordinating node. The control circuitry is connected to control radio circuitry 122 of the base station 100, which provides receiver and transmitter and/or transceiver functionality. It may be considered that control circuitry 120 comprises an extracting unit as described herein, in particular if the base station is configured to participate as a device in D2D communication. An antenna circuitry 124 may be connected or connectable to radio circuitry 122 to provide good signal reception or transmittance and/or amplification.

Each or any one of the user equipments shown in the figures may be adapted to perform the methods to be carried out by a user equipment or D2D enabled node described herein. Alternatively or additionally, each or any of the user equipments shown in the figures may comprise any one or any combination of the features of a user equipment or D2D enabled node described herein.

Each or any one of the network nodes or eNBs or base stations shown in the figures may be adapted to perform the methods to be carried out by network node or base station described herein. Alternatively or additionally, the each or any one of the network nodes or eNBs or base stations shown in the figures may comprise any one or any one combination of the features of a network node or eNB or base station described herein.

In systems with multiple carrier frequencies, a D2D enabled node or UE may operate over two or more carrier frequencies in parallel or in a sequential order, e.g., when performing measurements, transmitting or receiving radio signals or channels. Simultaneous or parallel operation over two or more carrier frequencies generally may require a higher complexity in the D2D enabled node or UE and a more complex receiver structure than operation in sequential order.

Inter-frequency operation generally may refer to operating, e.g. performing measurements (e.g., inter-frequency RSRP/RSRQ and RSTD) and/or receiving broadcast channels (e.g., system information reading on PBCH), on a carrier frequency which is different from the serving frequency(-ies). A D2D enabled node or UEs with a single receiver chain normally require measurement gaps for inter-frequency operation; other D2D enabled node or UEs may be always or in certain conditions capable of inter-frequency operation without measurement gaps.

The difference of CA (carrier aggregation) to inter-frequency operation is that in carrier aggregation, the D2D enabled node or UE has a possibility of operating over multiple serving cells or on a serving cell(s) which are not the primary serving cell. In such multi-carrier or carrier aggregation cellular system, a carrier is generally termed as a component carrier (CC) or sometimes is also referred to as cell or serving cell. In principle each CC has multiple cells. The term carrier aggregation (CA) is also called (e.g. interchangeably called) "multi-carrier system", "multi-cell operation", "multi-carrier operation", "multi-carrier" transmission and/or reception.

This means that CA may be used for transmission of signalling and data in the uplink and/or downlink directions. One of the CCs is the primary component carrier (PCC), which may also be referred to as simply primary carrier or anchor carrier and which may define or correspond to a primary cell (PCell). The remaining CCs are called secondary component carrier (SCC) or simply secondary carriers or even supplementary carriers and may define or correspond to one or more secondary cells or serving cells (SCell).

Generally, the primary or anchor CC may carry the essential signalling and/or control data specific to the D2D enabled node or UE. A primary CC (aka PCC or PCell) may exists in both uplink and downlink directions in CA. In case there is single UL CC, the PCell may be on that CC. The network may assign different primary carriers to different D2D enabled nodes or UEs operating in the same sector or cell. Generally, the term cell may refer to a PCell or a SCell.

It may be assumed that a D2D enabled node or UE both can transmit and receive in the uplink spectrum of a frequency band.

To support both transmit and receive operations in the same band, the D2D enabled node or UE needs to implement both its transmitter and its receiver compliant to existing transmitter and receiver requirements, respectively, for this band.

Depending on the band, it may be more challenging to meet either transmitter or receiver requirements, which may drive D2D enabled node or UE cost.

For example, there potentially may be services that are heavy or even limited in either DL or UL (e.g., broadcast of commercials over frequency f1), so there may be no need to develop both transmitter and receiver for a certain band for D2D enabled node or UEs mainly supporting such service(s).

To overcome such issues, there are described methods in and/or performed by a first D2D enabled node or UE of, and/or a first D2D enabled node or UE adapted for, maintaining, and/or of, and/or having and/or being adapted for, signaling to a second D2D enabled node or UE or a network node (e.g., eNodeB, positioning node, D2D server, coordinating node, etc.) at least one unidirectional frequency capability.

In one embodiment, the capability is the capability to support a unidirectional D2D operation (i.e., D2D transmissions or D2D receptions).

Generally, there is disclosed a D2D enabled node for a wireless communication network. The D2D enabled node is adapted for indicating at least one unidirectional frequency capability of the D2D enabled node to at least one other node. Accordingly, the other node may adapt its own operations, e.g. D2D operation, to the unidirectional frequency capability indicated.

Moreover, there is disclosed a method performed by a D2D enabled node. The method comprises indicating at least one unidirectional frequency capability of the D2D enabled node to at least one other node.

A node for a wireless communication network is also proposed. The node is adapted for obtaining at least one unidirectional frequency capability for a first D2D enabled node. In addition, the node is adapted for using the obtained unidirectional frequency capability for one or more of operational tasks.

There may be considered a method performed by a node for a wireless communication network. The method comprises obtaining at least one unidirectional frequency capability for a first D2D enabled node, as well as using the obtained unidirectional frequency capability for one or more of operational tasks.

Moreover, a computer program product comprising instructions executable by control circuitry is disclosed. The instructions cause the control circuitry to carry out and/or control a method according to any one of the methods disclosed herein when executed by the control circuitry.

A storage medium adapted to store instructions executable by control circuitry is also disclosed. The instructions cause the control circuitry to carry out and/or control a method according to any one of the methods disclosed herein when executed by the control circuitry.

A D2D device may comprise a D2D maintaining module for maintaining, and/or obtaining, the at least one unidirectional frequency capability. Alternatively or additionally, the D2D device may comprise a signaling module for signaling the at least one unidirectional frequency capability as described herein.

Methods in, and/or performed by, a first node (e.g., a second D2D enabled node or UE or a network node such as eNodeB, D2D server, positioning node, coordinating node, etc.) and/or a first node adapted for performing the method are described, which comprise steps of:
Step 1: Obtaining at least one unidirectional frequency capability for a D2D enabled node or UE, in particular a first D2D enabled node or UE;
Step 2: Using the obtained unidirectional frequency capability for one or more operational tasks.

A network device may be associated to the first node and/or being executable on the first node. It may be considered that a network device comprises a NW obtaining module for obtaining the at least one unidirectional frequency capability as described herein. The network device may comprise a NW use module for using the obtained unidirectional frequency capability as described herein.

Generally, maintaining a unidirectional frequency capability may comprise supporting and/or including and/or having such an capability and/or being adapted to provide the maintained unidirectional frequency capability and/or to perform such and/or according to such capability.

Obtaining a unidirectional frequency capability may refer to obtaining corresponding information indicating explicitly or implicitly the presence and/or form of such capability and/or relevant parameters and/or parameter values the capability. Obtaining may comprise receiving corresponding data, e.g. a message transmitted by another node, and/or reading from a storage or memory.

Indicating at least one unidirectional frequency capability may comprise transmitting, by a first node, a corresponding message and/or data and/or indication to another node, e.g. via a cellular transmission or a D2D transmission, or if the first node and second node are connected by cable, via cable.

A node having a capability may be adapted to carry out and/or support what it is capable of, e.g. under control of control circuitry of the node.

Methods in a D2D enabled node or UE are described in the following. According to this variant, a first D2D enabled node or UE performs, and/or is adapted to perform, the following (in any order):
(optional) maintaining at least one unidirectional frequency capability, and
(optional) operating according its unidirectional frequency capability, and
indicating at least one unidirectional frequency capability of the first D2D enabled node or UE to at least one other node (e.g., a second D2D enabled node or UE or a network node such as eNodeB, a base station, positioning node, D2D server, RNC, MME, coordinating node, etc.).

In one variant, the unidirectional frequency capability may comprise a D2D unidirectional frequency capability (e.g., D2D operation on one or more than one carriers, e.g. f1, is unidirectional only).

A D2D device may comprise a D2D indication module for indicating the at least one unidirectional frequency capability as described herein. It may be considered that the D2D device additionally or alternatively comprises a D2D operating module for operating, in particular operating the D2D enabled node or UE, according to its unidirectional frequency ability.

Unidirectional frequency capability is discussed in the following. In one embodiment, the unidirectional frequency capability herein may comprise a D2D enabled node or UE's capability to operate in a unidirectional fashion, e.g. based on its hardware and baseband constraints. The capability in this interpretation may be the same for the same D2D enabled node or UE for the same f1 with the same D2D enabled node or UE HW and baseband configuration.

In another embodiment, the unidirectional frequency capability herein may comprise a D2D enabled node or UE's choice or preference for operating on a certain carrier frequency or frequency band in a unidirectional fashion.

The choice or preference may be due to D2D enabled node or UE implementation and/or D2D enabled node or UE resource limitation and it may be viewed as a 'temporary D2D enabled node or UE capability', which may be controlled or controllable by the D2D enabled node or UE and/or configurable by a network node.

The capability in this interpretation may be different for the same D2D enabled node or UE for the same f1 with the same D2D enabled node or UE HW and baseband configuration but different operation conditions. A D2D device may comprise a D2D preference module for controlling the D2D enabled node according to the preference and/or choice as described herein, in particular based upon allocation and/or configuration data received, e.g. by a D2D reception module of the D2D device, from a network node like an allocation node and/or base station and/or eNodeB.

The at least one unidirectional frequency capability may comprise, e.g., any one or any combination of (in the following, f1 may indicate a first carrier frequency or band; a reference to only receive or transmit may refer to the specific carrier or receiver/transmitter/transceiver (e.g., for f1), such that e.g. "only transmit" or "transmit only" on f1 may be read as "on f1, only transmit" or that on the respective receiver/transmitter/transceiver for f1 is only transmitted):
1. D2D enabled node or UE's capability or D2D enabled node or UE's choice to only transmit (but not receive) on f1,
2. D2D enabled node or UE's capability or D2D enabled node or UE's choice to receive only (but not transmit) on f1,
3. D2D enabled node or UE's capability or D2D enabled node or UE's choice to simultaneously transmit only (but not receive) on f1, which in this case may comprise two or more carrier frequencies or frequency bands,
4. D2D enabled node or UE's capability or D2D enabled node or UE's choice to simultaneously receive only (but not transmit) on f1, which in this case may comprise two or more carrier frequencies or frequency bands,
5. D2D enabled node or UE's capability or D2D enabled node or UE's choice to simultaneously only transmit (but not receive) on f1_tx and only receive (but not transmit) on f1_rx,
6. D2D enabled node or UEs capability or D2D enabled node or UE's choice to only transmit (but not receive) over bandwidth BW_tx on f1,
7. D2D enabled node or UEs capability or D2D enabled node or UE's choice to only receive (but not transmit) over bandwidth BW_rx on f1,
8. D2D enabled node or UE's capability or D2D enabled node or UE's choice to operate in DL or UL CA on a combination C of two or more frequencies or frequency bands, wherein the combination comprises at least one carrier frequency or frequency band of f1, e.g., (f1 ,f2) or (f1, f2, f3, f4, f5).
9. D2D enabled node or UEs capability or D2D enabled node or UE's choice to operate on a combination F of two or more (e.g. carrier) frequencies or frequency bands, wherein the combination comprises at least one carrier frequency or frequency band of f1, e.g., (f1,f2) or (f1,f2, f3, f4, f5), and wherein at least one carrier frequency or frequency band (may or may not be f1) in the combination is used for non-cellular operation by the D2D enabled node or UE. In one example, the non-cellular operation may comprise D2D operation.
In the above, f1 (also denoted as f1_tx or f1_rx in some embodiments) may identify one or more of certain carrier frequencies and/or a certain frequency bands which allow for bidirectional operation (i.e., transmit and receive) for at least one D2D enabled node or UE which is capable of doing this. In different examples, D2D enabled node or UE unidirectional frequency capability(-ies) may, but does not need, to apply for one, some, or all of f2, f3, f4, f5, etc.

The unidirectional frequency capability may be maintained in the D2D enabled node or UE statically, semi-statically, or dynamically. In one example, the capability may be determined by statically, semi-statically, or dynamically configurable RF components in the D2D enabled node or UE.

A D2D enabled node or UE may have one or more multiple unidirectional frequency capabilities.

Methods of operating according to unidirectional frequency capability(-ies) are discussed in the following. The D2D enabled node or UE with at least unidirectional frequency capability can, and/or may be adapted to, operate according to this capability on the corresponding at least one of f1 and/or combinations C/F that involve at least one of f1. A D2D device may comprise a D2D operation module for operating as described herein.

For a unidirectional transmit capability associated with f1, the operating may comprise transmitting at least one signal type on f1.

For a unidirectional receive capability associated with f1, the operating may comprise receiving at least one signal type on f1.

The operating according to a unidirectional frequency capability may further comprise the D2D enabled node or UE being configured with a configuration compliant with the respective unidirectional capability. The D2D enabled node or UE may use a pre-defined configuration, may decide the configuration autonomously (e.g., depending on the deployment scenario, interference conditions, carriers availability or load, etc.), may be configured by an application, or may be configured by an external device or another node (e.g., a network node such as eNodeB).

In another embodiment, the operating may comprise selecting, e.g. by the D2D enabled node or UE (e.g., autonomously), at least one carrier frequency and/or frequency band or their combination for transmitting and/or receiving radio signals, based on its at least one unidirectional capability. The selection may also be based on other additional criteria, e.g., interference, load, absolute frequency (lower frequencies have a better coverage), service availability, carrier bandwidth, etc. A D2D device may comprise a D2D selecting module for selecting thusly, which may be part of a D2D operation module as described herein.

In yet another embodiment, the operating may comprise the D2D enabled node or UE indicating to another node (e.g., eNodeB) a preferred or recommended one or a set of carrier frequencies and/or frequency bands or their combinations, based on its one or more unidirectional capabilities.

The D2D enabled node or UE may start operating according to its unidirectional frequency capability(-ies) with or without negotiation or coordination or communication with another node (e.g., a network node). In one example, the D2D enabled node or UE starts transmitting on f1 according to its unidirectional frequency capability upon an internal trigger (e.g., from an application and/or event and/or based on a measurement). In another example, the D2D enabled node or UE starts transmitting on f1 after being configured by the network (e.g. a network node or serving node or allocating node or coordinating node) to do so (e.g., the network node may allow and/or configure the D2D enabled node or UE to transmit and/or allocate specific resources for its transmission; corresponding allocation data may be transmitted by the network node and/or received by the first D2D enabled node or UE), which may occur e.g. after the D2D enabled node or UE has indicated its corresponding unidirectional capability to the network node.

When a D2D enabled node or UE has multiple unidirectional frequency capabilities, it may operate according to one, some or all of them at a time.

For example, a D2D enabled node or UE may have a unidirectional transmit frequency capability for frequency band A and a unidirectional receive frequency capability for frequency band B, so it may use the former when it is configured to operate on A and/or it may use the latter when it is configured to operate on B; whether it can or cannot operate simultaneously on A (transmit) and B (receive) may also depend on whether it support the combination (A,B), which may be combination C or combination F.

Generally, one or more of a D2D enabled node or UE's unidirectional capabilities may be used based on and/or under one or more of certain conditions, e.g., any one or more of the following conditions:
- The D2D enabled node or UE may be adapted to operate and/or to be configured and/or be configured or operate according to its capability #5 based on and/or when one or both of the following conditions are met:
   Frequency distance between f1_tx and f1_rx is below a threshold,
   Frequency duplex distance between f1_tx and f1_rx is in the range [d_min, d_max], where in one trivial example 0=d_min<d_max, in another trivial example 0<d_min<d_max=Inf, and in yet another trivial example d_min=d_max.
- The D2D enabled node or UE may be adapted to operate and/or to be configured configured or operate according to its capabilities #3,#4 based on and/or when one or both of the following conditions are met:
   Frequency distance between two frequencies/bands in f1 is below a threshold,
   Frequency duplex distance between two frequencies/bands in f1 is in the range [d_min, d_max], where in one trivial example 0=d_min<d_max, in another trivial example 0<d_min<d_max=Inf, and in yet another trivial example d_min=d_max.

Methods of indicating unidirectional capability(-ies) are discussed in the following. The indicating may be, e.g.,
- implicit (e.g., via following a certain behavior pattern which can be recognized by the other node and which is determined by the capability, signaling of data or configuration which is indirectly indicative of a D2D enabled node or UE unidirectional frequency capability), or
- explicit (e.g., explicit signaling to the other node via broadcast/multicast/unicast signaling, via higher-layer protocols (e.g., RRC or D2D higher-layer protocol) or physical channels or combination thereof).

The indication or indicating may comprise, e.g.,
- an indication of at least one carrier frequency of f1 for which the D2D enabled node or UE has at least one unidirectional frequency capability,
- an indication of at least one combination C or combination F with at least one carrier frequency of f1 for which the D2D enabled node or UE has at least one unidirectional frequency capability,
- an indicator (e.g., yes/no) associated with at least one f1 indicative of at least one D2D enabled node or UE unidirectional frequency capability.
In a further embodiment, the indication may additionally comprise, e.g., any one or more of:
- direction of the unidirectional frequency capability (e.g., DL or UL, transmit or receive),
- bandwidth over which the unidirectional frequency capability applies (e.g., may or may not be the same as system bandwidth, channel bandwidth; unidirectional receive frequency capability may apply over BW1 on f1 while unidirectional transmit frequency capability may apply over BW2 on the same f1 and BW1 is different from BW2),
- transmit power with which the unidirectional frequency capability applies (e.g., any of: a unidirectional transmit frequency capability applies when the transmit power P1 is above a threshold, a unidirectional transmit frequency capability applies when the transmit power P2 is below a threshold),
- time-frequency resources in which the unidirectional frequency capability applies (e.g., one or a set or pattern of subframes; one or a set or a pattern of RBs),
- service for which the unidirectional frequency capability applies (e.g., D2D communication in general or a specific D2D communication service). A D2D device may comprise a D2D indication module for indicating as described herein.

The D2D enabled node or UE may indicate, and/or be adapted to indicate, its unidirectional frequency capability(-ies) based on and/or upon a request from another node, in an unsolicited way, upon a triggering event or condition; the D2D enabled node may be adapted to receive a request from another node. For example, D2D enabled node or UE unidirectional capabilities may be indicated when any one or any one combination of the following indication conditions occurs:
- connection initiation, setup, configuration or reconfiguration,
- random access,
- handover or cell change,
- access, subscription or session setup for a certain service (e.g., D2D in general or commercials broadcast service subscription),
- capability information exchange with another node,
- capability request from a serving or another network node,
- when a received signal strength or quality of a radio link drops below a threshold,
- as a part of CA configuration process or CA service access.

A D2D device may comprise a D2D indication triggering module for triggering the indicating as described herein, in particular for determining whether any one or any one combination of the indication conditions described above occur and/or for receiving a corresponding request.

Methods in a node are described in the following. Embodiments described in this section may be combined with any one or more embodiments described in other sections. According to this part of the disclosure, a first node (e.g., a second D2D enabled node or UE or a network node such as eNodeB, D2D server, positioning node, coordinating node, etc.) may perform, and/or be adapted to perform, any one or any combination of the following steps:
Step 1: Obtaining at least one unidirectional frequency capability for a first D2D enabled node or UE,
Step 2: Using the obtained unidirectional frequency capability for one or more of operational tasks.

Unidirectional frequency capability is described above. A network device may comprise a NW obtaining module for obtaining as described herein and/or a NW use module for using as described herein. The unidirectional frequency capability obtained generally may describe a capability of a first D2D enabled node or UE different from the first node, in particular physically different and/or differently located.

Methods of obtaining unidirectional frequency capability of a D2D enabled node or UE are described in the following. The node may be adapted to obtain and/or obtain unidirectional frequency capability in one or more ways, e.g.:
- receiving from the first D2D enabled node or UE via explicit or implicit (e.g., based on observed D2D enabled node or UE behavior, measurement reports, indicated D2D enabled node or UE-preferred configuration, D2D enabled node or UE resource/scheduling requests, etc.) signaling,
- receiving from another D2D enabled node or UE (other than the first D2D enabled node or UE, e.g., a relaying D2D enabled node or UE) or another network node (e.g., eNodeB, relay, MME, coordinating node, positioning node, D2D server, etc.) via explicit or implicit signaling,
- determining based on measurements performed on the first D2D enabled node or UE transmissions and/or measurements performed by the first D2D enabled node or UE, which may be transmitted to (e.g. from the first D2D enabled node or UE) and/or received by the first node;
- sensing transmissions, in particular from the firstD2D enabled node or UE, on f1 and/or other frequencies,
- deriving the unidirectional frequency capability of the first D2D enabled node or UE from other capabilities of the same D2D enabled node or UE.

In one embodiment, unidirectional frequency capability may be obtained selectively, e.g., only from first D2D enabled nodes or UEs with D2D capability.

Methods of using D2D enabled node or UE unidirectional frequency capability are discussed in the following. The first node (e.g., a second D2D enabled node or UE or a network node such as eNodeB, D2D server, positioning node, coordinating node, MME, etc.) may be adapted to use, and/or use, the unidirectional frequency capability information of one or more first D2D enabled nodes or UEs in any one or any combination of the following ways or methods, e.g.:
- sending the obtained capability to a second node (e.g., to another D2D enabled node or UE or to another network node such as eNodeB, D2D server, positioning node, coordinating node, MME, etc.), e.g., upon obtaining, upon a request, in an unsolicited way, or upon a triggering event or condition,
- forwarding the received capability to a second node, e.g., upon receiving, upon a request, in an unsolicited way, or upon a triggering event or condition,
- storing in internal or external memory, in a database, in statistics, or in history for using it later, etc.
- configuring D2D enabled node or UE for operating according the obtained unidirectional capability (see also Section 6.2.2),
- configuring measurements for the D2D enabled node or UE, based on its unidirectional frequency capability (e.g., no UL measurements or bidirectional measurements that have an UL component can be configured on f1 if the D2D enabled node or UE supported only receiving on f1),
- allocating resources (e.g., subframes, RBs, etc.) or scheduling for the D2D enabled node or UE operation on at least f1, accounting for its unidirectional frequency capability,
- adapting D2D enabled node or UE configuration (e.g., measurement bandwidth, CA configuration) based on the obtained unidirectional frequency capability of the D2D enabled node or UE,
- configuring one or more carrier frequencies or bands or their combinations for D2D enabled node or UE operation according obtained unidirectional frequency capability,
- using the obtained unidirectional frequency capability for D2D enabled node or UE handover, cell change, carrier change, etc.
- using the obtained unidirectional frequency capability when configuring the first D2D enabled node or UE positioning or selecting a positioning method (e.g., select a DL positioning method on f1 if the D2D enabled node or UE supports only receiving on f1),
- accounting for unidirectional frequency capability of one or more D2D enabled node or UEs for RRM purpose (e.g., load balancing, interference coordination, measurement collection for MDT or SON, etc.),
- adapting one or more radio parameters used at the network node, e.g., adapting the bandwidth of carrier frequencies used for serving cellular data, etc.
A network device may comprise a NW use module for using the unidirectional frequency capability information of one or more first D2D enabled nodes or UEs as described herein.

The described approaches may provide:
- A possibility for D2D enabled node or UEs to implement only transmitter or only receiver on some frequency/band, even the band supports bidirectional operation.
- Means for other D2D enabled node or UEs and network nodes to learn the D2D enabled node or UE unidirectional frequency capability and use this own operational tasks.

There is also disclosed a D2D enabled node, which may be adapted to perform any one or any one combination of the methods and/or comprise any one or any one combination of the features described herein in the context of a D2D enabled node. In particular, control circuitry and/or a controller of the D2D enabled node may be adapted to control and/or perform the method and/or steps of the method, in particular to control radio circuitry of the D2D enabled node correspondingly.

There is also disclosed a network node, which may be adapted to perform any one or any one combination of the methods and/or comprise any one or any combination of the features described herein in the context of a network node. In particular, control circuitry and/or a controller of the network node may be adapted to control and/or perform the method and/or steps of the method. The network node may be a node of and/or for a wireless communication network and/or may be adapted to configure a D2D enabled node, e.g. by transmitting to the D2D enabled node corresponding configuration data and/or allocation data.

There is also disclosed a method, in particular in and/or for D2D operation of a network, which may combine any of the steps of the methods for operating a D2D enabled node and a network node described herein.

There are also disclosed one or more software devices, e.g. a D2D device and/or a network device comprising suitable modules adapted to perform the steps of any of the methods described herein.

Generally, there is also disclosed a computer program product comprising instructions executable by control circuitry and/or a computing device, the instruction causing the control circuitry and/or computing device to carry out and/or control any one of the methods described herein when executed by the control circuitry and/or computing device. The control circuitry and/or computing device may be implemented in any one or more than one of the nodes to carry out and/or control corresponding methods or method steps.

Modules performing method steps described herein may generally be implemented in software and/or hardware and/or firmware in and/or on corresponding nodes. Modules of or on or in one node or device, in particular modules for a D2D device or network device, may be implemented in a common module or flow and/or in parallel and/or independent modules or flows and/or share functionality.

Pertaining to the term device-to-device (D2D), it should be noted that in some examples, the terms 'D2D' or 'proximity service' (ProSe) or 'peer-to-peer communication' may be used interchangeably.

A D2D enabled node may be a UE, which may be D2D capable, and may be referred to as D2D enabled or capable UE. It may comprise any entity or device or node capable of at least receiving or transmitting radio signals on a direct radio link, i.e., between this entity and another D2D capable entity.

A D2D-capable device or D2D enabled node may for example be comprised in or comprise a cellular UE, PDA, a wireless device, laptop, mobile, sensor, relay, D2D relay, a small base station employing a UE-like interface, etc. A D2D enabled node or UE is able to support at least one D2D operation.

A D2D enabled node may generally be adapted for cellular operation and/or communication in a wireless communication network. A D2D enabled node may generally comprise radio circuitry and/or control circuitry for wireless communication, in particular D2D operation or communication and cellular operation or communication. A D2D device may be a software/program arrangement arranged to be executable by a hardware device, e.g. control circuitry, and/or storable in a memory of e.g. a UE or terminal, which may provide D2D functionality and/or corresponding control functionality to e.g. a UE or terminal.

D2D operation may comprise any action or activity related to D2D or D2D communication and may be used interchangeably D2D communication. D2D operation may include, e.g., transmitting or receiving a signal/channel type or data for D2D purposes and/or in D2D operation, transmitting or receiving data by means of D2D communication, transmitting or receiving control or assistance data for D2D purpose, transmitting or receiving a request for control or assistance data for D2D, selecting a D2D operation mode, initiating/starting D2D operation, switching to D2D operation mode from a cellular operation mode, configuring receiver or transmitter with one or more parameters for D2D. D2D operation may be for a commercial purpose or to support public safety, using the data related to D2D. D2D operation may or may not be specific to a certain D2D service. A D2D receive operation may be, and/or be comprised in, a D2D operation, which may, in one example, also involve other than D2D receive operations. A D2D operation may generally be performed or performable by a D2D enabled node or UE. A D2D receive operation may comprise receiving, by a D2D enabled node, of D2D data and/or signals. A D2D transmit operation may comprise, transmitting, by a D2D enabled node, of D2D data and/or signals. A D2D enabled node performing at least one D2D operation may be considered to be in D2D or D2D mode or in D2D operation.

Cellular operation (in particular by a D2D enabled node or UE) may comprise any action or activity related to a cellular network (any one or more RATs). Some examples of cellular operation may be a radio signal transmission, a radio signal reception, performing a radio measurement, performing a mobility operation or RRM related to a cellular network.

D2D transmission may be any transmission by a D2D enabled node or device and/or in a D2D operation or mode or communication. Some examples of D2D transmission may comprise physical signals or physical channels, dedicated or common/shared, e.g., reference signal, synchronization signal, discovery channel, control channel, data channel, broadcast channel, paging channel, scheduling assignment (SA) transmissions, etc. A D2D transmission on a direct radio link may be intended for receiving by another D2D device. A D2D transmission may be a unicast, groupcast, or broadcast transmission. A D2D transmission may be on the uplink time-frequency resources of a wireless communication system.

A coordinating or controlling or allocating node may be a node or network node that is adapted to schedule, decide and/or select and/or allocate, at least in part, time-frequency resources to be used for at least one of: cellular transmissions and D2D transmissions. The coordinating node may also provide the scheduling information to another node such as another D2D enabled node, a cluster head, a radio network node such as eNodeB, or a network node (e.g. a core network node), MME, positioning node, D2D server, RNC, SON, etc). The network node or coordinating node may communicate with a radio network node. It may be envisioned that a coordinating node may also perform coordination for one or more D2D enabled node or UEs. The coordination may be performed in a centralized or distributed manner. A coordinating node may provide the functionality of an allocation node. A network device may be a software/program arrangement arranged to be executable by a hardware device, e.g. control circuitry, and/or storable in a memory of a network node, which may provide D2D functionality and/or corresponding control functionality to e.g. network node.

Pertaining to a radio spectrum, it should be noted that, although at least some of the embodiments are described for D2D transmissions in the UL spectrum (FDD) or UL resources (TDD), the embodiments are not limited to the usage of UL radio resources, neither to licensed or unlicensed spectrum, or any specific spectrum at all.

A cellular network or wireless communication network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology) may generally include: e.g. LTE FDD, LTE TDD, GSM, CDMA, WCDMA, WiFi, WLAN, WiMAX, etc.

A network node may be a radio network node (which may be adapted for wireless or radio communication, e.g. with a D2D enabled node or a UE) or another network node. A network node generally may be an allocation node or coordinating node. Some examples of the radio network node are a radio base station, eNodeB, a relay node, an access point, a cluster head, RNC, etc. The radio network node may be comprised in a wireless communication network and may also support cellular operation. A network node, in particular a radio network node, comprises radio circuitry and/or control circuitry, in particular for wireless communication. Some examples of a network node, which is not a radio network node, may comprise: a core network node, MME, a node controlling at least in part mobility of a wireless device, SON node, O&M node, positioning node, a server, an application server, a D2D server (which may be capable of some but not all D2D-related features), a node comprising a ProSe function, a ProSe server, an external node, or a node comprised in another network. Any network node may comrpsie control circuitry and/or a memory. A network node may be considered to be serving a D2D enabled node or UE, if it provides a cell of a cellular network to the served node or D2D enabled node or UE and/or is connected or connectable to the D2D enabled node or UE via and/or for transmission and/or reception and/or UL and/or DL data exchange or transmission and/or if the network node is adapted to provide the D2D enabled node or UE with allocation and/or configuration data and/or to configure the D2D enabled node or UE.

Multiple carrier frequencies or functionality may refer to any of: different carrier frequencies within the same frequency band or within different frequency bands, same PLMN or different PLMNs, same RAT or different RATs. D2D operation may or may not occur on dedicated carrier frequencies. DL and UL carrier frequencies in FDD are also examples of different carrier frequencies. A frequency band herein may be FDD, TDD, HD-FDD, or unidirectional (e.g., DL-only band such as Band 29, in some examples). Multiple carrier functionality may include carrier aggregation functionality.

The term 'TPC for D2D' used herein may refer to or comprise at least one power control command for one or more of D2D transmissions (e.g., SA, D2D data, D2D synchronization signal, D2D control channel, D2D discovery transmission, any D2D transmission for D2D communication, any D2D transmission for D2D discovery). TPC for cellular UL' may comprise or refer to at least one power control command sent by or via a network node or eNodeB to control tx power of one or more cellular UL transmissions. The two different types of TPCs may be sent in the same or separate messages to the D2D enabled node or UE, via the same or different channels or channel types (e.g., PDCCH and/or EPDCCH) and/or be comprises in one set or packet or message of allocation data or in different sets or packets or messages of allocation data.

A D2D enabled node may generally be a node adapted to perform D2D communication, in particular transmission and/or reception, and/or at least one type of D2D operations. In particular, a D2D enabled node may be a terminal and/or user equipment and/or D2D enabled machine and/or sensor. The D2D enabled node may be adapted to transmit and/or receive D2D data based on allocation data, in particular on and/or utilizing resources indicate in the allocation data. D2D communication and/or transmission by a D2D enabled node may generally be in UL resources and/or corresponding carrier or frequency and/or modulation. In this context, stopping D2D communication in response and/or based on a release message may be considered to correspond to transmitting based on allocation data, wherein the release message may be considered to be allocation data. A D2D enabled node (such as a UE) may be adapted for and/or capable of CA or CA operation. In particular, it may be adapted to transmit and/or receive one or more than one CCs and/or utilising, and/or participating in, carrier aggregation. A D2D enabled node may be adapted to configure itself according to configuration data, which may include setting up and/or scheduling resources and/or equipment for receiving and/or transmitting and/or sharing of resources and/or in particular D2D operation and/or cellular operation based on the configuration data. Configuration data may be received, by the D2D enabled node, from another node, in particular a network node. A network node, in particular a controlling and/or allocating node, may generally be adapted to provide and/or determine and/or transmit configuration data, in particular to a D2D enabled node.

Configuration data may be considered to be a form of allocation data and/or may be provided in the form of a message and/or data packet/s. Configuring a D2D enabled node or UE, e.g. configuring of the node by a network node, may include determining and/or transmitting configuration data to the node to be configured, i.e. the D2D enabled node or UE. Determining the configuration data and transmitting this data to a D2D enabled node or UE may be performed by different nodes, which may be arranged such that they may communicate and/or transport the configuration data between each other, in particular such that the node determining or adapted to determine the configuration data may transmit the configuration data to the node transmitting it or adapted to transmit it; the latter node may be adapted to receive the configuration data and/or relay and/or provide a message bases on the configuration data, e.g. by reformatting and/or amending and/or updating data received.

Transmit power (or power density) may generally refer to the power (or power density) of a signal transmitted or generally to the power of wireless transmission. Transmit power (or power density) may in particular refer to the power (or power density) of a signal transmitted by and/or transmissions of a D2D enabled node or UE. Transmit power generally may refer to a specific channel and/or frequency and/or cell and/or carrier and/or bandwidth and/or carrier aggregate and/or a general setup. UL transmit power, or shorter UL power, may refer to the power of a signal transmitted, in particular by a D2D enabled node or UE, in cellular operation and/or to or for a network node serving the D2D enabled node or UE, for example a base station or eNodeB. D2D transmit power (or power density) may refer to the power (or power density) of a signal transmitted, in particular by a D2D enabled node or UE, in D2D operation and/or for D2D transmission. Transmit power (or power density) may refer to or pertain to a time unit or interval, e.g. a slot, subframe or frame, and/or transmit power control may be performed for and/or updated in such units or intervals. Power control or transmit power control may generally refer to control of transmit power and/or transmit power spectral and/or temporal density. Power control commands in TPC format or TPC may be used for controlling power and/or to cause a D2D enabled node or UE receiving at least one such command or TPC message to control power based on and/or according to the command or TPC. The command or TPC may be transmitted to the D2D enabled node from or via a network node, in particular a base station or eNB or allocating node.

Capability data and/or a capability indication or indication message may provide and/or comprise capability information. In this context, the capability may refer to whether the D2D enabled node or UE is capable of operating simultaneously perform D2D and cellular operations on a combination of carriers and/or frequency bands and/or to which combination/s of carriers and/or frequency bands a D2D enabled node or UE can be configured, and/or is operable in and/or adapted to operate in, to simultaneously perform D2D and cellular operations; or at least a part of the corresponding combinations. Capabilities information and/or the indication or indication message, may indicate explicitly or implicitly one, or at least one, or a plurality of, combination/s of carriers and/or frequency bands on which the first D2D enabled node or UE can be configured and/or is operable in and/or adapted to operate in, to simultaneously perform D2D and cellular operations, and/or may comprise parameters and/or parameter values and/or indication and/or information regarding the capabilities of the first D2D enabled node. The capability indication or indication message may be transmitted or transmittable as a D2D transmission or a cellular transmission. It may be envisioned that a D2D enabled node or UE determines and/or transmits and/or is adapted to determine and/or transmit such a message either and/or both as a D2D transmission and as a cellular transmission. In particular, a D2D enabled node or UE may be transmit or be adapted to transmit the indication or indication message as D2D transmission, in particular based on the target of the transmission being, and/or if the target of the transmission is, a second D2D enabled node or UE, and/or based on corresponding D2D resources being, and/or if corresponding D2D resources are, allocated to the D2D enabled node or UE. Alternatively or additionally, the D2D enabled node or UE may transmit, and/or be adapted to transmit, the indication or indication message in or with a cellular transmission or operation, in particular if the target node is not a D2D enabled node and/or based on cellular or only cellular resources being allocated to the D2D enabled node or UE. A D2D enabled node may be adapted to obtain capabilities information, e.g. by reading it from a memory or storage, which may be a memory or storage of the D2D enabled node or UE.

A D2D device may comprise an obtaining module for obtaining capabilities information, e.g. as described herein. Additionally or alternatively, a D2D device may comprise a capabilities information transmitting device for transmitting a capabilities indication or indication message as described herein.

Cellular DL operation of a D2D enabled node or UE may refer to receiving transmissions in DL, in particular in cellular operation and/or from a network node/eNB/base station. Cellular UL operation of a D2D enabled node or UE may refer to UL transmissions, in particular in cellular operation, e.g. transmitting to a network node/eNB/base station.

A D2D enabled node may generally be a node adapted to perform D2D communication, in particular transmission and/or reception, and/or at least one type of D2D operations. In particular, a D2D enabled node may be a terminal and/or user equipment. The D2D enabled node may be adapted to transmit and/or receive D2D data based on allocation data, in particular on and/or utilizing resources indicate in the allocation data. D2D communication and/or transmission by a D2D enabled node may in some variants be in UL resources and/or at least one corresponding carrier or frequency and/or modulation.

In the context of this description, wireless communication may be communication, in particular transmission and/or reception of data, via electromagnetic waves and/or an air interface, in particular radio waves, e.g. in a wireless communication network and/or utilizing a radio access technology (RAT). The communication may be between nodes of a wireless communication network and/or in a wireless communication network. It may be envisioned that a node in or for communication, and/or in, of or for a wireless communication network is adapted for, and/or for communication utilizing, one or more RATs, in particular LTE/E-UTRA. A communication may generally involve transmitting and/or receiving messages, in particular in the form of packet data. A message or packet may comprise control and/or configuration data and/or payload data and/or represent and/or comprise a batch of physical layer transmissions. Control and/or configuration data may refer to data pertaining to the process of communication and/or nodes of the communication. It may, e.g., include address data referring to a node of the communication and/or data pertaining to the transmission mode and/or spectral configuration and/or frequency and/or coding and/or timing and/or bandwidth as data pertaining to the process of communication or transmission, e.g. in a header.

Each node involved in communication may comprise radio circuitry and/or control circuitry and/or antenna circuitry, which may be arranged to utilize and/or implement one or more than one radio access technologies. Radio circuitry of a node may generally be adapted for the transmission and/or reception of radio waves, and in particular may comprise a corresponding transmitter and/or receiver and/or transceiver, which may be connected or connectable to antenna circuitry and/or control circuitry. Control circuitry of a node may comprise a controller and/or memory arranged to be accessible for the controller for read and/or write access. The controller may be arranged to control the communication and/or the radio circuitry and/or provide additional services.

Circuitry of a node, in particular control circuitry, e.g. a controller, may be programmed to provide the functionality described herein. A corresponding program code may be stored in an associated memory and/or storage medium and/or be hardwired and/or provided as firmware and/or software and/or in hardware. A controller may generally comprise a processor and/or microprocessor and/or microcontroller and/or FPGA (Field-Programmable Gate Array) device and/or ASIC (Application Specific Integrated Circuit) device. More specifically, it may be considered that control circuitry comprises and/or may be connected or connectable to memory, which may be adapted to be accessible for reading and/or writing by the controller and/or control circuitry. Radio access technology may generally comprise, e.g., Bluetooth and/or Wifi and/or WIMAX and/or cdma2000 and/or GERAN and/or UTRAN and/or in particular E-Utran and/or LTE. A communication may in particular comprise a physical layer (PHY) transmission and/or reception, onto which logical channels and/or logical transmission and/or receptions may be imprinted or layered.

A node of a wireless communication network may be implemented as a user equipment and/or base station and/or relay node and/or any device generally adapted for device-to-device communication. A wireless communication network may comprise at least one of a device configured for device-to-device communication and/or a user equipment and/or base station and/or relay node, in particular at least one user equipment, which may be arranged for device-to-device communication with a second node of the wireless communication network, in particular with a second user equipment. A node of or for a wireless communication network may generally be a wireless device configured for wireless device-to-device communication, in particular using the frequency spectrum of a cellular and/or wireless communications network, and/or frequency and/or time resources of such a network. Device-to-device communication may optionally include broadcast and/or multicast communication to a plurality of devices or nodes. A cellular network may comprise a network node, in particular a radio network node, which may be connected or connectable to a core network, e.g. a core network with an evolved network core, e.g. according to LTE. The connection between the network node and the core network/network core may be at least partly based on a cable/landline connection.

Operation and/or communication and/or exchange of signals involving part of the core network, in particular layers above a base station or eNB, and/or via a predefined cell structure provided by a base station or eNB, may be considered to be of cellular nature or be called cellular operation. Operation and/or communication and/or exchange of signals without involvement of layers above a base station and/or without utilizing a predefined cell structure provided by a base station or eNB, may be considered to be D2D communication or operation, in particular, if it utilises the radio resources, in particular carriers and/or frequencies, and/or equipment (e.g. circuitry like radio circuitry and/or antenna circuitry, in particular transmitter and/or receiver and/or transceiver) provided and/or used for cellular operation.

A user equipment (UE) may generally be a device configured for wireless device-to-device communication and/or a terminal for a wireless and/or cellular network, in particular a mobile terminal, for example a mobile phone, smart phone, tablet, PDA, etc. A user equipment may be a node of or for a wireless communication network as described herein, in particular a D2D enabled node. It may be envisioned that a user equipment is adapted for one or more RATs, in particular LTE/E-UTRA. A user equipment may generally be proximity services (ProSe) enabled, which may mean it is D2D capable or enabled. It may be considered that a user equipment comprises radio circuitry and/control circuitry for wireless communication. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. A node or device of or for a wireless communication network, in particular a node or device for device-to-device communication, may generally be a user equipment. It may be considered that a user equipment is configured to be a user equipment adapted for LTE/E-UTRAN.

A base station may be any kind of base station of a wireless and/or cellular network adapted to serve one or more user equipments. It may be considered that a base station is a node of a wireless communication network. A base station may be adapted to provide and/or define one or more cells of the network and/or to allocate frequency and/or time resources for communication to one or more nodes of a network, in particular UL resources, for example for device-to-device communication, which may be communication between devices different from the base station. Generally, any node adapted to provide such functionality may be considered a base station. It may be considered that a base station or more generally a network node, in particular a radio network node, comprises radio circuitry and/or control circuitry for wireless communication. It may be envisioned that a base station or network node is adapted for one or more RATs, in particular LTE/E-UTRA. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device.

It may be considered that control circuitry comprises or may be connected or connectable to memory, which may be adapted to be accessible for reading and/or writing by the controller and/or control circuitry. A base station may be arranged to be a node of a wireless communication network, in particular configured for and/or to enable and/or to facilitate and/or to participate in device-to-device communication, e.g. as a device directly involved or as an auxiliary and/or coordinating node. Generally, a base station may be arranged to communicate with a core network and/or to provide services and/or control to one or more user equipments and/or to relay and/or transport communications and/or data between one or more user equipments and a core network and/or another base station and/or be Proximity Service enabled.

An eNodeB (eNB) may be envisioned as an example of a base station. A base station may generally be proximity service enabled and/or to provide corresponding services. It may be considered that a base station is configured as or connected or connectable to an Evolved Packet Core (EPC) and/or to provide and/or connect to corresponding functionality. The functionality and/or multiple different functions of a base station may be distributed over one or more different devices and/or physical locations and/or nodes. A base station may be considered to be a node of a wireless communication network. Generally, a base station may be considered to be configured to be a coordinating node and/or to allocate resources in particular for device-to-device communication between two nodes of a wireless communication network, in particular two user equipments.

Device-to-device (D2D) communication or operation may generally refer to communication between nodes of a wireless communication network or corresponding operation of one or more nodes, which may utilize the frequency spectrum and/or frequency and/or time resources of the network, in particular according to LTE/E-UTRAN. The communication may be wireless communication. A device in this context may be a node of the wireless communication network, in particular a user equipment or a base station. Device-to-device communication may in particular be communication involving at least one user equipment, e.g. between two or more user equipments. Device-to-device communication may be relayed and/or provided via a base station or coordinating node or relay node, in particular without interaction with a core network and/or layers of the network above a base station or coordinating node, or be direct communication between two devices, e.g. user equipments, without involvement of a base station or coordinating node and/or with a base station or coordinating node providing merely auxiliary services, e.g. configuration data or a transmission configuration or related information for a message intended for device-to-device communication between user equipments. In the latter case, it may be considered that data and/or signals flowing between the nodes performing device-to-device communication are not transported via the base station and/or coordinating node. In contrast, during cellular communication, network layers above the eNB/base station/coordination node may generally be involved, in particular core layers which may be connected to the eNB/base station/coordinating node via cable/land line. During device-to-device communication, a message may be provided and/or transmitted and/or received. A message may be considered to be or be represented by a batch of physical layer transmissions and/or may comprise such. A message may comprise information regarding the transmission configuration, in particular regarding related information, e.g. in a header, and/or a payload.

A unidirectional message may be a message for connectionless communication and/or for which no prior communication and/or prior connection between the transmitting node and receiving node is necessary and/or available and/or for which no response or no response protocol or no handshake is expected. A device configured for and/or capable of device-to-device communication, which may be called D2D enabled device or node, may comprise control circuitry and/or radio circuitry configured to provide device-to-device communication, in particular configured to enable proximity services (ProSe-enabled), e.g., according to LTE/E-UTRA requirements. D2D operation or communication and cellular operation or communication may be considered different operation types or modes, which may generally performed using resources from the same pool of available resources, e.g. allocated resources and/or the same carriers.

A storage medium may be adapted to store data and/or store instructions executable by control circuitry and/or a computing device, the instruction causing the control circuitry and/or computing device to carry out and/or control any one of the methods described herein when executed by the control circuitry and/or computing device. A storage medium may generally be computer-readable, e.g. an optical disc and/or magnetic memory and/or a volatile or nonvolatile memory and/or flash memory and/or RAM and/or ROM and/or EPROM and/or EEPROM and/or buffer memory and/or cache memory and/or a database.

Allocated resources may generally be frequency and/or time resources. Allocated resources may comprise frequency-related information, in particular regarding one or more carriers and/or bandwidth and/or subcarriers and/or time-related information, in particular regarding frames and/or slots and/or subframes, and/or regarding resource blocks and/or time/frequency hopping information. Allocated resources may in particular refer to UL resources, e.g. UL resources for a first D2D enabled node to transmit to and/or for a second D2D enabled node. Transmitting on allocated resources and/or utilizing allocated resources may comprise transmitting data on the resources allocated, e.g. on the frequency and/or subcarrier and/or carrier and/or timeslots or subframes indicated. It may generally be considered that allocated resources may be released and/or de-allocated. A network or a node of a network, e.g. an allocation node, may be adapted to determine and/or transmit corresponding allocation data indicating release or de-allocation of resources to one or more D2D enabled nodes, in particular to a first D2D enabled node. Accordingly, D2D resource allocation may be performed by the network and/or by a node, in particular a node within and/or within a cell of a cellular network covering the D2D enabled nodes participating or intending to participate in the D2D communication.

Allocation data may be considered to be data indicating and/or granting resources allocated by the allocation node, in particular data identifying or indicating which resources are reserved or allocated for D2D communication for a D2D enabled node and/or which resources a D2D enabled node may use for D2D communication and/or data indicating a resource grant or release. A grant or resource grant may be considered to be one example of allocation data. It may be considered that an allocation node is adapted to transmit allocation data directly to a node and/or indirectly, e.g. via a relay node and/or another node or base station. Allocation data may comprise control data and/or be part of or form a message, in particular according to a pre-defined format, for example a DCI format, which may be defined in a standard, e.g. LTE. In particular, allocation data may comprise information and/or instructions to reserve resources or to release resources, which may already be allocated. Generally, allocation data may indicate and/or instruct transmission or reception mode and/or configuration, in particular regarding a power level of transmission, e.g. for the first D2D enabled node, and/or use, in particular of receiver and/or transmitter radio circuitry of the D2D enabled node, for D2D operation or cellular operation and/or use for receiving or transmitting. The first D2D enabled node may generally be adapted to perform transmission and/or reception configuration according to allocation data, in particular to set a corresponding power level and/or D2D or cellular operation. It may be considered that allocation data comprises and/or is implemented as TPC and/or in TPC format.

A D2D transmission may be considered to be of a different type than a cellular and/or UL transmission. A transmission may pertain to a specific frequency and/or spectrum and/or bandwidth and/or carrier.

A receiver or receiver chain may generally be provided by a transceiver arrangement, which may have transmitting capabilities included, or as a separate arrangement, which may be implemented without having transmitting capacities included.

A measurement gap may refer to a time gap or interval, in which no transmission and reception happens, in particular regarding a serving cell or a given carrier. Since there is no signal transmission and reception during the gap (at least in the serving cell or given carrier), a D2D enabled node or UE can switch to another or a target cell or carrier and/or perform a measurement on the target cell or carrier, e.g. for signal quality, utilizing the same receiver.

The term "intra-frequency" may refer to issued related to the same frequency/bandwith and/or carrier, e.g. between neighbouring cells (which may be provided by different BSs) having the same frequencies available. The term "inter-frequency" may refer to issues related to different frequencies/bandwidths and/or carriers, e.g. between different carriers in a multi-carrier arrangement.

A receiving operation may comprise a measurement operation, e.g. a signal quality measurement, which may be performed in a measurement gap, in which a receiver switching to a carrier/frequency to be measured may be performed.

Some useful abbreviations comprise:
3GPP 3^{rd} Generation Partnership Project
Ack/Nack Acknowledgment/Non-Acknowledgement, also A/N
AP Access point
BER/BLER Bit Error Rate, BLock Error Rate;
BS Base Station
CA Carrier Aggregation
CoMP Coordinated Multiple Point Transmission and Reception
CQI Channel Quality Information
CRS Cell-specific Reference Signal
CSI Channel State Information
CSI-RS CSI reference signal
D2D Device-to-device
DL Downlink
EPDCCH Enhanced Physical DL Control CHannel
DL Downlink; generally referring to transmission of data to a node/into a direction further away from network core (physically and/or logically); in particular from a base station or eNodeB to a D2D enabled node or UE; often uses specified spectrum/bandwidth different from UL (e.g. LTE)
eNB evolved NodeB; a form of base station, also called eNodeB
E-UTRA/N Evolved UMTS Terrestrial Radio Access/Network, an example of a RAT
f1, f2, f3,...,fn carriers/carrier frequencies; different numbers may indicate that the referenced carriers/frequencies are different
f1_UL,..., fn_UL Carrier for Uplink/in Uplink frequency or band
f1_DL,... ,fn_DL Carrier for Downlink/in Downlink frequency or band
FDD Frequency Division Duplexing
ID Identity
L1 Layer 1
L2 Layer 2
LTE Long Term Evolution, a telecommunications standard
MAC Medium Access Control
MBSFN Multiple Broadcast Single Frequency Network
MDT Minimisation of Drive Test
NW Network
OFDM Orthogonal Frequency Division Multiplexing
O&M Operational and Maintenance
OSS Operational Support Systems
PC Power Control
PDCCH Physical DL Control CHannel
PH Power Headroom
PHR Power Headroom Report
PSS Primary Synchronization Signal
PUSCH Physical Uplink Shared CHannel
RA Random Access
RACH Random Access CHannel
RAT Radio Access Technology
RE Resource Element
RB Resource Block
RRH Remote radio head
RRM Radio Resource Management
RRU Remote radio unit
RSRQ Reference signal received quality
RSRP Reference signal received power
RSSI Received signal strength indicator
RX reception/receiver, reception-related
SA Scheduling Assignment
SINR/SNR Signal-to-Noise-and-Interference Ratio; Signal-to-Noise Ratio
SFN Single Frequency Network
SON Self Organizing Network
SSS Secondary Synchronization Signal
TPC Transmit Power Control
TX transmission/transmitter, transmission-related
TDD Time Division Duplexing
UE User Equipment
UL Uplink; generally referring to transmission of data to a node/into a direction closer to a network core (physically and/or logically); in particular from a D2D enabled node or UE to a base station or eNodeB; in the context of D2D, it may refer to the spectrum/bandwidth utilized for transmitting in D2D, which may be the same used for UL communication to a eNB in cellular communication; in some D2D variants, transmission by all devices involved in D2D communication may in some variants generally be in UL spectrum/bandwidth/carrier/frequency

These and other abbreviations may be used according to LTE standard definitions.

In this description, for purposes of explanation and not limitation, specific details are set forth (such as particular network functions, processes and signaling steps) in order to provide a thorough understanding of the technique presented herein. It will be apparent to one skilled in the art that the present concepts and aspects may be practiced in other embodiments and variants that depart from these specific details.

For example, the concepts and variants are partially described in the context of Long Term Evolution (LTE) or LTE-Advanced (LTE-A) mobile or wireless communications technologies; however, this does not rule out the use of the present concepts and aspects in connection with additional or alternative mobile communication technologies such as the Global System for Mobile Communications (GSM). While the following embodiments will partially be described with respect to certain Technical Specifications (TSs) of the Third Generation Partnership Project (3GPP), it will be appreciated that the present concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the embodiments described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

It is believed that the advantages of the aspects and variants presented herein will be fully understood from the foregoing description, and it will be apparent that various changes may be made in the form, constructions and arrangement of the exemplary aspects thereof without departing from the scope of the concepts and aspects described herein or without sacrificing all of its advantageous effects. Because the aspects presented herein can be varied in many ways, it will be recognized that any scope of protection should be defined by the scope of the claims in light of the description and drawings.

## Claims

1. A Device-to-Device, D2D, enabled node (10) for a wireless communication network, the D2D enabled node (10) being adapted for indicating at least one unidirectional frequency capability of the D2D enabled node (10) to at least one other D2D enabled node (12, 100), wherein the at least one unidirectional frequency capability is indicated by an implicit signaling, wherein the implicit signaling is based on at least one of an observed D2D enabled node behavior pattern which can be recognized by the other D2D enabled node and which is determined by the capability, D2D enabled node-preferred configuration which is indirectly indicative of the capability, and D2D enabled node resource or scheduling requests.

2. A method performed by a D2D enabled node (10), the method comprising indicating at least one unidirectional frequency capability of the D2D enabled node (10) to at least one other D2D enabled node (12, 100), wherein the at least one unidirectional frequency capability is indicated by an implicit signaling, wherein the implicit signaling is based on at least one of an observed D2D enabled node behavior pattern which can be recognized by the other D2D enabled node and which is determined by the capability, a D2D enabled node-preferred configuration which is indirectly indicative of the capability, and D2D enabled node resource or scheduling requests.

3. A Device-to-Device, D2D, enabled node (12, 100) for a wireless communication network, the D2D enabled node (12, 100) being adapted for obtaining at least one unidirectional frequency capability for a first D2D enabled node (10); the D2D enabled node (12, 100) further being adapted for using the obtained at least one unidirectional frequency capability for one or more of operational tasks, wherein the at least one unidirectional frequency capability is indicated by an implicit signaling, wherein the implicit signaling is based on at least one of an observed D2D enabled node behavior pattern which can be recognized by the other D2D enabled node and which is determined by the capability, a D2D enabled node-preferred configuration which is indirectly indicative of the capability, and D2D enabled node resource or scheduling requests.

4. A method performed by a D2D enabled node (12, 100) for a wireless communication network, the method comprising:
obtaining at least one unidirectional frequency capability for a first D2D enabled node (10), wherein the at least one unidirectional frequency capability is indicated by an implicit signaling, wherein the implicit signaling is based on at least one of an observed D2D enabled node behavior pattern which can be recognized by the other D2D enabled node and which is determined by the capability, a D2D enabled node-preferred configuration which is indirectly indicative of the capability, and D2D enabled node resource or scheduling requests; and
using the obtained at least one unidirectional frequency capability for one or more of operational tasks.

5. A computer program product comprising instructions executable by control circuitry of the D2D enabled nodes according to claims 1 and 3, the instructions causing the control circuitry to carry out the method according to one of claims 2 or 4.

6. A storage medium adapted to store instructions executable by control circuitry of the D2D enabled nodes according to claims 1 and 3, the instructions causing the control circuitry to carry out the method according to one of claims 2 or 4.

## Patentansprüche

1. Vorrichtung-zu-Vorrichtung-fähiger Knoten, D2D-fähiger Knoten, (10) für ein drahtloses Kommunikationsnetz, wobei der D2D-fähige Knoten (10) dazu eingerichtet ist, mindestens eine unidirektionale Frequenzfähigkeit des D2D-fähigen Knotens (10) mindestens einem anderen D2D-fähigen Knoten (12, 100) anzugeben, wobei die mindestens eine unidirektionale Frequenzfähigkeit durch eine implizite Signalisierung angegeben wird, wobei die implizite Signalisierung auf mindestens einem von einem beobachteten Verhaltensmuster eines D2D-fähigen Knotens basiert, das durch den anderen D2D-fähigen Knoten erkannt werden kann und bestimmt wird durch die vom D2D-fähigen Knoten bevorzugte Konfiguration, die indirekt die Fähigkeit angibt, und die Ressourcen- oder Planungsanforderungen des D2D-fähigen Knotens.

2. Verfahren durchgeführt durch einen D2D-fähigen Knoten (10), wobei das Verfahren umfasst: Angeben mindestens einer unidirektionalen Frequenzfähigkeit des D2D-fähigen Knotens (10) an mindestens einen anderen D2D-fähigen Knoten (12, 100), wobei die mindestens eine unidirektionale Frequenzfähigkeit durch eine implizite Signalisierung angegeben wird, wobei die implizite Signalisierung basiert auf mindestens einem von einem beobachteten Verhaltensmuster eines D2D-fähigen Knotens, das durch den anderen D2D-fähigen Knoten erkannt werden kann und bestimmt wird durch die Fähigkeit, eine vom D2D-fähigen Knoten bevorzugten Konfiguration, die indirekt die Fähigkeit angibt, und die Ressourcen- oder Planungsanforderungen des D2D-fähigen Knotens.

3. Vorrichtung-zu-Vorrichtung-fähiger Knoten, D2D-fähiger Knoten, (12, 100) für ein drahtloses Kommunikationsnetz, wobei der D2D-fähige Knoten (12, 100) dazu eingerichtet ist, mindestens eine unidirektionale Frequenzfähigkeit für einen ersten D2D-fähigen Knoten (10) zu erhalten; wobei der D2D-fähige Knoten (12, 100) ferner eingerichtet ist zum Verwenden der erhaltenen mindestens einen unidirektionalen Frequenzfähigkeit für eine oder mehrere betriebliche Aufgaben, wobei die mindestens eine unidirektionale Frequenzfähigkeit durch eine implizite Signalisierung angegeben wird, wobei die implizite Signalisierung basiert auf mindestens einem von einem beobachteten Verhaltensmuster eines D2D-fähigen Knotens, das durch den anderen D2D-fähigen Knoten erkannt werden kann und bestimmt wird durch die Fähigkeit, eine vom D2D-fähigen Knoten bevorzugten Konfiguration, die indirekt die Fähigkeit angibt, und die Ressourcen- oder Planungsanforderungen des D2D-fähigen Knotens.

4. Verfahren, durchgeführt durch einen D2D-fähigen Knoten (12, 100) für ein drahtloses Kommunikationsnetz, wobei das Verfahren umfasst:
Erhalten mindestens einer unidirektionalen Frequenzfähigkeit für einen ersten D2D-fähigen Knoten (10), wobei die mindestens eine unidirektionale Frequenzfähigkeit durch eine implizite Signalisierung angegeben wird, wobei die implizite Signalisierung basiert auf mindestens einem von einem beobachteten Verhaltensmuster eines D2D-fähigen Knotens, das durch den anderen D2D-fähigen Knoten erkannt werden kann und bestimmt wird durch die Fähigkeit, eine vom D2D-fähigen Knoten bevorzugten Konfiguration, die indirekt die Fähigkeit angibt, und die Ressourcen- oder Planungsanforderungen des D2D-fähigen Knotens; und Verwenden der erhaltenen mindestens einen unidirektionalen Frequenzfähigkeit für eine oder mehrere Betriebsaufgaben.

5. Computerprogrammprodukt, das Anweisungen umfasst, die durch eine Steuerschaltung der D2D-fähigen Knoten nach den Ansprüchen 1 und 3 ausführbar sind, wobei die Anweisungen bewirken, dass die Steuerschaltung das Verfahren nach einem der Ansprüche 2 oder 4 ausführt.

6. Speichermedium, das dazu eingerichtet ist, Anweisungen zu speichern, die durch die Steuerschaltung der D2D-fähigen Knoten nach den Ansprüchen 1 und 3 ausführbar sind, wobei die Anweisungen bewirken, dass die Steuerschaltung das Verfahren nach einem der Ansprüche 2 oder 4 durchführt.

## Revendications

1. Nœud à fonction de dispositif à dispositif, D2D (10) pour un réseau de communication sans fil, le nœud à fonction D2D (10) étant conçu pour indiquer au moins une capacité de fréquence unidirectionnelle du nœud à fonction D2D (10) à au moins un autre nœud à fonction D2D (12, 100), dans lequel l'au moins une capacité de fréquence unidirectionnelle est indiquée par une signalisation implicite, dans lequel la signalisation implicite est basée sur au moins l'un parmi un modèle de comportement observé de nœud à fonction D2D qui peut être reconnu par l'autre nœud à fonction D2D et qui est déterminé par la capacité, une configuration préférée de nœud à fonction D2D qui est indirectement indicative de la capacité, et des demandes de ressources ou de planification de nœud à fonction D2D.

2. Procédé mis en œuvre par un nœud à fonction D2D (10), le procédé comprenant le fait d'indiquer au moins une capacité de fréquence unidirectionnelle du nœud à fonction D2D (10) à au moins un autre nœud à fonction D2D (12, 100), dans lequel l'au moins une capacité de fréquence unidirectionnelle est indiquée par une signalisation implicite, dans lequel la signalisation implicite est basée sur au moins l'un parmi un modèle de comportement observé de nœud à fonction D2D qui peut être reconnu par l'autre nœud à fonction D2D et qui est déterminé par la capacité, une configuration préférée de nœud à fonction D2D qui est indirectement indicative de la capacité, et des demandes de ressources ou de planification de nœud à fonction D2D.

3. Nœud à fonction de dispositif à dispositif, D2D (12, 100) pour un réseau de communication sans fil, le nœud à fonction D2D (12, 100) étant conçu pour obtenir au moins une capacité de fréquence unidirectionnelle pour un premier nœud à fonction D2D (10) ; le nœud à fonction D2D (12, 100) étant en outre conçu pour utiliser l'au moins une capacité de fréquence unidirectionnelle obtenue pour une ou plusieurs des tâches opérationnelles, dans lequel l'au moins une capacité de fréquence unidirectionnelle est indiquée par une signalisation implicite, dans lequel la signalisation implicite est basée sur au moins l'un parmi un modèle de comportement observé de nœud à fonction D2D qui peut être reconnu par l'autre nœud à fonction D2D et qui est déterminé par la capacité, une configuration préférée de nœud à fonction D2D qui est indirectement indicative de la capacité, et des demandes de ressources ou de planification de nœud à fonction D2D.

4. Procédé mis en œuvre par un nœud à fonction D2D (12, 100) pour un réseau de communication sans fil, le procédé comprenant :
l'obtention d'au moins une capacité de fréquence unidirectionnelle pour un premier nœud à fonction D2D (10), dans lequel l'au moins une capacité de fréquence unidirectionnelle est indiquée par une signalisation implicite, dans lequel la signalisation implicite est basée sur au moins l'un parmi un modèle de comportement observé de nœud à fonction D2D qui peut être reconnu par l'autre nœud à fonction D2D et qui est déterminé par la capacité, une configuration préférée de nœud à fonction D2D qui est indirectement indicative de la capacité, et des demandes de ressources ou de planification de nœud à fonction D2D ; et l'utilisation de l'au moins une capacité de fréquence unidirectionnelle obtenue pour une ou plusieurs des tâches opérationnelles.

5. Produit programme informatique comprenant des instructions exécutables par un circuit de commande des nœuds à fonction D2D selon les revendications 1 et 3, les instructions amenant le circuit de commande à effectuer le procédé selon l'une quelconque des revendications 2 ou 4.

6. Support de stockage conçu pour stocker des instructions exécutables par un circuit de commande des nœuds à fonction D2D selon les revendications 1 et 3, les instructions amenant le circuit de commande à effectuer le procédé selon l'une quelconque des revendications 2 ou 4.
